# EUROPÄISCHE PATENTSCHRIFT

(11) **EP 1 817 662 B1**
(45) Veröffentlichungstag und Bekanntmachung des Hinweises auf die Patenterteilung: **29.07.2009**
(21) Anmeldenummer: 05808034.2
(22) Anmeldetag: 25.10.2005
(51) Int. Cl.: G06F 9/38

(54) **VERFAHREN UND VORRICHTUNG ZUR UMSCHALTUNG ZWISCHEN BETRIEBSMODI EINES MULTIPROZESSORSYSTEMS DURCH WENIGSTENS EIN EXTERNES SIGNAL**
METHOD AND DEVICE FOR SWITCHING BETWEEN OPERATING MODES OF A MULTIPROCESSOR SYSTEM BY MEANS OF AT LEAST AN EXTERNAL SIGNAL
PROCEDE ET DISPOSITIF DE COMMUTATION DE MODE DE FONCTIONNEMENT D'UN SYSTEME MULTIPROCESSEUR PAR L'INTERMEDIAIRE D'AU MOINS UN SIGNAL EXTERNE

(30) Priorität: 25.10.2004 DE 102004051937; 25.10.2004 DE 102004051992; 25.10.2004 DE 102004051952; 25.10.2004 DE 102004051950; 25.10.2004 DE 102004051964; 08.08.2005 DE 102005037213
(43) Veröffentlichungstag der Anmeldung: 15.08.2007
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); ANGERBAUER, Ralf, 71701 Schwieberdingen (DE); COLLANI, Yorck, 71717 Beilstein (DE); GMEHLICH, Rainer, 71254 Ditzingen (DE); BOEHL, Eberhard, 72768 Reutlingen (DE); KOTTKE, Thomas, 71139 Ehningen (DE); PFEIFFER, Wolfgang, 71723 Grossbottwar (DE); HARTWICH, Florian, 72762 Reutlingen (DE); HARTER, Werner, 75428 Illingen (DE); GRAEBITZ, Karsten, 70439 Stuttgart (DE)
(86) Internationale Anmeldenummer: PCT/EP2005/055509
(87) Internationale Veröffentlichungsnummer: WO 2006/045782

(56) Entgegenhaltungen:
- WO-A-01/48599
- US-A1- 2004 123 201
- US-B1- 6 272 616
- US-B1- 6 615 366

## Beschreibung

### Stand der Technik

Die Erfindung betrifft eine Vorrichtung und ein Verfahren zur Umschaltung zwischen wenigstens zwei Betriebsmodi eines Multiprozessorsystems mit wenigstens zwei Ausführungseinheiten sowie ein entsprechendes Prozessorsystem gemäß den Oberbegriffen der unabhängigen Ansprüche

Transiente Fehler, ausgelöst durch Alpha-Teilchen oder kosmische Strahlung, werden zunehmend ein Problem für integrierte Halbleiterschaltungen. Durch abnehmende Strukturbreiten, sinkende Spannungen und höhere Taktfrequenzen nimmt die Wahrscheinlichkeit zu, dass eine Spannungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen, insbesondere im Kraftfahrzeug, müssen solche Fehler daher zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden bei den entsprechenden Steuereinrichtungen solcher Systeme üblicherweise Redundanzen zur Fehlererkennung eingesetzt. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Ein Mikrocontroller besteht einerseits aus Speichermodulen (z.B. RAM, ROM, Cache), aus einem Prozessor (CPU, Core) und aus Ein- /Ausgangs-Schnittstellen, so genannten Peripherals (z.B. A/D-Wandler, CAN-Schnittstelle). Da Speicherelemente mit Prüfcodes (Parity oder ECC) effektiv überwacht werden können, und Peripherals oft anwendungsspezifisch als Teil eines Sensor- oder Aktor-Signalpfades überwacht werden, besteht ein weiterer Redundanzansatz in der alleinigen Verdopplung der Cores (CPUs) eines Mikrocontrollers.

Solche Mikrocontroller mit wenigstens zwei integrierten Cores sind auch als Dual-Core oder Multi-Core Architekturen bekannt. Beide Cores führen redundant und taktsynchron das gleiche Programmsegment aus, die Ergebnisse der beiden Ausführungseinheiten werden verglichen, und ein Fehler wird dann bei dem Vergleich auf Übereinstimmung erkannt werden. Im Folgenden wird diese Konfiguration eines Multi-Core Systems als Vergleichsmodus bezeichnet.

Dual-Core oder Multi-Core Architekturen werden in anderen Anwendungen auch zur Leistungssteigerung, also zu einer Performanz-Steigerung eingesetzt. Beide Cores führen unterschiedliche Programme aus, wodurch sich eine Leistungssteigerung erzielen lässt, weshalb diese Konfiguration eines Multi-Core Systems als Leistungsmodus oder Performanzmodus bezeichnet wird. Dieses System wird auch als ein symmetrisches Multiprozessorsystem (SMP) bezeichnet.

Eine Erweiterung dieser Systeme kann mittels einer Umschaltung erreicht werden, d.h. je nach Anwendungszweck des Multiprozessorsystem kann dieses in einem Vergleichsmodus oder in einem Performanzmodus betreiben werden. Im Vergleichsmodus werden die Ausgangsignale der Cores miteinander verglichen. Bei einer Differenz wird ein Fehlersignal ausgegeben. Im Performanzmodus arbeiten die beiden Cores als ein symmetrisches Mehrprozessorsystem (SMP) und führen unterschiedliche Programme aus.

Aus der US2004/123201 ist bereits ein Rechnersystem bekannt bei dem nach einem Reset wahlweise ein Leistungsmodus oder Performanzmodus eingenommen werden kann.

### Vorteile der Erfindung

Es sind Systeme, vor allem im Automobilbereich bekannt, die auf externe Ereignisse oder abhängig von externen Ereignissen reagieren sollen. In solchen Systemen kann es vorteilhaft sein, eine Umschaltung abhängig von prozessorexternen Bedingungen (z.B. Sensorwerte, Systemzustand, Fahrzeugzustand) vorzunehmen. Im Automobil werden in Zukunft zunehmend zeitgesteuerte Kommunikationssysteme eingesetzt. In Verbindung mit diesen Kommunikationssystemen kann es vorteilhaft sein, den Betriebsmodus eines Multiprozessorsystems abhängig von einer globalen Zeitbasis des Kommunikationssystems oder weiterer Zeitereignisse umzuschalten.

In Echtzeitsystemen kann es u. a. auch zur Fehlerbehandlung nützlich sein, eine Betriebsmodusumschaltung eines Multiprozessorsystems von einem Redundanzmodus (Vergleichsmodus) in einen Nichtredundanzmodus (Performanzmodus) vorzunehmen, um eine getrennte Fehlerlokalisierung und - behandlung zu ermöglichen. Auch unterschiedliche Systemmodi (z.B. in einem kraftfahrzeugregelsystem) können unterschiedliche Anforderungen an die optimalen Prozessormodi stellen. Damit kann es nützlich sein, das gleiche Programm im Systemmodus 1 in einem ersten Betriebsmodus des Prozessorsystems ablaufen zu lassen, während es im Systemmodus 2 vorteilhafter weise in einem zweiten Betriebsmodus des Prozessorsystems abläuft. Eine gezielte Umschaltung in einen dedizierten Betriebsmodus oder das Unterbinden einer solchen Umschaltung abhängig von externen Signalen ist im Stand der Technik, d.h. durch eine programmspezifische Kennung oder den Zugriff auf eine bestimmte Speicheradresse nicht zu leisten.

Aufgabe der Erfindung ist es abhängig von einem externen Signal eine Umschaltung zwischen verschiedenen Betriebsmodi einzuleiten.

Vorteilhafterweise wird ein Verfahren zur Umschaltung bei einem Rechnersystem mit wenigstens zwei Ausführungseinheiten beschrieben, wobei zwischen wenigstens zwei Betriebsmodi umgeschaltet wird und ein erster Betriebsmodus einem Vergleichsmodus und ein zweiter Betriebsmodus einem Performanzmodus entspricht. Die Umschaltung wird durch wenigstens ein Signal ausgelöst, welches außerhalb des Rechnersystems erzeugt wird, dem eine Kennung zugeordnet ist oder eine solche enthält, wobei nur dann eine Umschaltung erfolgt, wenn die Kennung vorhanden ist. Vorteilhaft wird durch die Kennung festgelegt, in welchen Betriebsmodus umgeschaltet wird. Vorteilhaft enthält die Kennung eine Zeitbedingung, durch welche festgelegt wird wann umgeschaltet wird. Vorteilhaft erfolgt durch das externe Signal eine Umschaltung nur in einer Richtung zwischen den Betriebsmodi.

Vorteilhaft erfolgt durch das externe Signal ausschließlich eine Umschaltung vom Performanzmodus in den Vergleichsmodus. Vorteilhaft erfolgt durch das externe Signal ausschließlich eine Umschaltung vom Vergleichsmodus in den Performanzmodus. Vorteilhaft stellt das Signal die Triggerung einer Unterbrechungsverarbeitung dar. Vorteilhaft entspricht die Kennung einem vorgegebenen Signalverlauf, insbesondere eines pulsweitenmodulierten Signals. Vorteilhaft entspricht die Kennung einer vorgegebenen Frequenz. Vorteilhaft entspricht die Kennung einer vorgegebenen Bitfolge eines Digitalsignals. Vorteilhaft entspricht die Kennung einer vorgegebenen Nachrichten-ID einer Botschaft eines Kommunikationssystems. Vorteilhaft wird die Umschaltung durch eine Kombination aus wenigstens einem Signal, welches außerhalb des Rechnersystems erzeugt wird und aus wenigstens einer Information, die innerhalb des Rechnersystems erzeugt wird, ausgelöst. Vorteilhaft erfolgt eine Umschaltung nur dann, wenn das wenigstens eine externe Signal und die wenigstens eine Rechnersysteminterne Information zeitgleich vorhanden sind. Vorteilhaft erfolgt eine Umschaltung nur dann, wenn eine zeitlich begrenzte Freigabe zur Umschaltung abhängig von wenigstens einem externen Signal erfolgt und innerhalb der begrenzten Freigabezeit wenigstens eine Rechnersysteminterne Information oder ein Rechnersysteminternes Ereignis zur Umschaltung vorliegt. Vorteilhaft ist eine Vorrichtung zur Umschaltung bei einem Rechnersystem mit wenigstens zwei Ausführungseinheiten enthalten, wobei Umschaltmittel enthalten sind, die derart ausgestaltet sind, dass diese zwischen wenigstens zwei Betriebsmodi umschalten, wobei ein erster Betriebsmodus einem Vergleichsmodus und ein zweiter Betriebsmodus einem Performanzmodus entspricht dadurch gekennzeichnet, dass Empfangsmittel enthalten sind, welche wenigstens ein außerhalb des Rechnersystems erzeugtes Signal empfangen, wobei die Umschaltung durch das außerhalb des Rechnersystems erzeugte Signal ausgelöst wird. Vorteilhaft ist das Empfangsmittel zum Empfang des wenigstens einen externen Signals ein Interruptcontroller. Vorteilhaft sind Empfangsmittel enthalten, welche wenigstens ein außerhalb des Rechnersystems erzeugtes Signal empfangen, und Mittel enthalten sind, welche das von außerhalb empfangene Signal oder eine Kennung desselben mit einem intern erzeugten Signal kombinieret, wobei die Umschaltung durch eine Kombination aus wenigstens einem Signal, welches außerhalb des Rechnersystems erzeugt wird und aus wenigstens einer Information, die innerhalb des Rechnersystems erzeugt wird, ausgelöst wird

Weitere Vorteile und vorteilhafte Ausgestaltungen ergeben sich aus den Merkmalen der Ansprüche sowie der Beschreibung.

### Figuren

Figur 1 zeigt ein Multiprozessorsystem mit zwei Ausführungseinheiten, mit Einrichtungen zum Vergleich von Daten der zwei Ausführungseinheiten und mit einer Umschalteinheit zur Umschaltung der Betriebsmodi
Figur 2 zeigt ein Multiprozessorystem mit zwei Ausführungseinheiten, mit Einrichtungen zum Vergleich von Daten der zwei Ausführungseinheiten und mit einer Umschalteinheit zur Umschaltung der Betriebsmodi und einer externen Signalquelle, die ein Umschaltsignal erzeugt
Figur 3 zeigt ein Multiprozessorsystem mit zwei Ausführungseinheiten, mit Einrichtungen zum Vergleich von Daten der zwei Ausführungseinheiten und mit einer Umschalteinheit zur Umschaltung der Betriebsmodi und einer externen Signalquelle, die mit einem Interruptcontroller des Multiprozessorsystem verbunden ist.
Figur 4 zeigt ein Multiprozessorsystem mit zwei Ausführungseinheiten, mit Einrichtungen zum Vergleich von Daten der zwei Ausführungseinheiten und mit einer Umschalteinheit zur Umschaltung der Betriebsmodi und einer externen Signalquelle, die über ein Kommunikationssystem mit dem Multiprozessorsystem verbunden ist.
Figur 5 zeigt eine allgemeine Umschalt- und Vergleichseinheit.

### Beschreibung der Ausführungsbeispiele

Eine Ausführungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

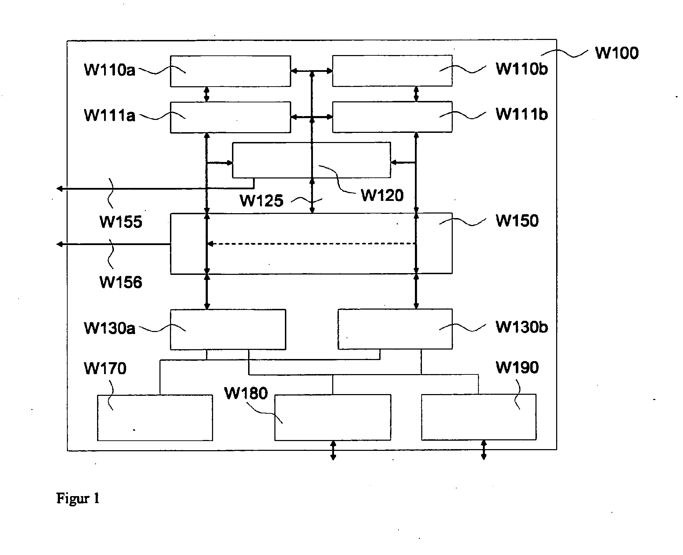

Die Erfindung bezieht sich auf ein in Figur 1 dargestelltes Multiprozessorsystem W100 mit wenigstens zwei Ausführungseinheiten W110a, W110b, einer Vergleichseinheit W120 und einer Umschalteinheit W150. Die Ausführungseinheiten sind jeweils über einen optionalen Zwischenspeicher W111a, W111b mit einer Vergleichseinheit W120 und einer Umschalteinheit W150 verbunden. Die Umschalteinheit W150 hat wenigstens zwei Ausgänge zu zwei Systemschnittstellen W130a, W130b. Über diese Schnittstellen können Register, Speicher oder Peripherals wie Digitale Ausgänge, D/A-Wandler, Kommunikationscontroller angesteuert werden.

Dieses Multiprozessorsystem kann in wenigstens zwei Betriebsmodi betrieben werden, einem Vergleichsmodus VM und einem Performanzmodus PM.

Im Performanzmodus PM werden in den unterschiedlichen Ausführungseinheiten unterschiedliche Befehle, Programmsegmente oder Programme parallel ausgeführt. In diesem Betriebsmodus ist die Vergleichseinheit deaktiviert. Die Umschalteinheit W150 ist in diesem Betriebsmodus so konfiguriert, dass jede Ausführungseinheit über den optionalen Zwischenspeicher mit einer der Systemschnittstellen W130a, W130b verbunden ist. Über die Systemschnittstellen kann ein Resultat einer Ausführungseinheit in einen Speicher W170 geschrieben werden oder auf einen Peripheriebaustein W180, W190 ausgegeben werden. Ein Peripheriebaustein kann z.B. ein Analog-Digital-Wandler oder ein Kommunikationscontroller eines Kommunikationssystems (z.B. SPI, LIN, CAN, FlexRay) sein.

Zur Deaktivierung der Vergleichseinheit gibt es mehrere Möglichkeiten. Zum einen kann man an den Vergleicher ein Signal führen, mit dem dieser aktiviert oder deaktiviert wird. Dazu ist im Vergleicher eine zusätzliche Logik einzufügen, die dies durchführen kann. Eine weitere Möglichkeit ist es, dem Vergleicher keine zu vergleichenden Daten zuzuführen. Eine dritte Möglichkeit ist es, auf Systemebene das Fehlersignal des Vergleichers zu ignorieren. Weiter kann man auch das Fehlersignal selbst unterbrechen. Allen Möglichkeiten ist gemeinsam, dass sie im System einen Zustand erzeugen, bei dem es keine Rolle spielt, wenn zwei oder mehr Daten, die potenziell verglichen werden, verschieden sind. Wird dieser Zustand durch eine Maßnahme im Vergleicher oder dessen Ein- oder Ausgangssignalen erreicht, dann wird der Vergleicher als passiv oder deaktiviert bezeichnet.

Im Vergleichsmodus VM werden in beiden Ausführungseinheiten W110a, W110b gleiche oder gleichartige Befehle, Programmsegmente oder Programme abgearbeitet. Über die optionalen Zwischenspeicher W111a, W111b werden die Ausgangssignale der Ausführungseinheiten an die Vergleichseinheit W120 und an die Umschalteinheit W150 geführt. In der Vergleichseinheit werden die beiden Daten auf Übereinstimmung geprüft. Nach erfolgtem Vergleich wird der Umschalteinheit über ein Statussignal W125 mitgeteilt, ob diese eines der übereinstimmenden Ergebnisse an eine der Systemschnittstellen ausgeben darf oder ob sie aufgrund einer erkannten Diskrepanz der Ergebnisse das Signal sperren muss. In diesem Fall kann von der Vergleichseinheit ein optionales Fehlersignal W155 ausgegeben werden. Dieses Fehlersignal kann anstatt von der Vergleichseinheit auch von der Umschalteinheit ausgegeben werden W156.

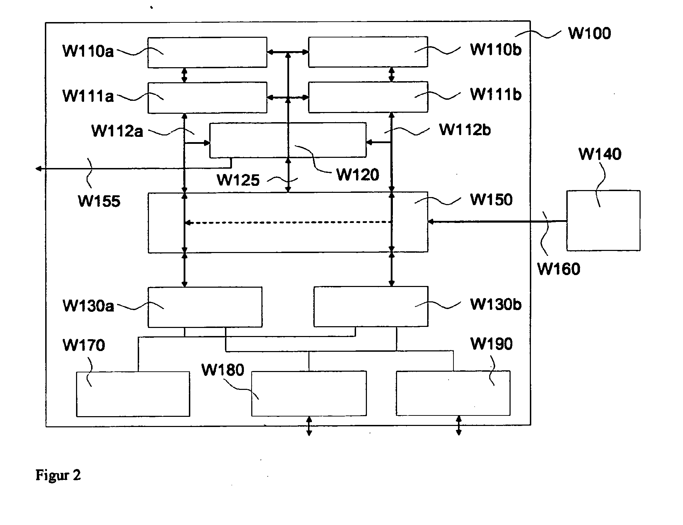

Die Umschaltung kann dabei entweder über die Ausführung von speziellen Umschaltinstruktionen, speziellen Instruktionssequenzen, explizit gekennzeichneten Instruktionen oder durch den Zugriff auf eine bestimmte Speicheradresse durch wenigstens einen der Cores des Multiprozessorsystems ausgelöst werden. In der vorliegenden Erfindung wird die Umschaltung zwischen den beiden Betriebsmodi des Multiprozessorsystem durch wenigstens ein Signal W160 ausgelöst, welches von einer Einrichtung bzw. Signalquelle W140 außerhalb des Rechnersystems erzeugt wird dargestellt in Figur 2.

In einem ersten Ausführungsbeispiel erfolgt eine Umschaltung abhängig von genau einem Signal. Diese Umschaltung kann so erfolgen, dass durch genau eine Eigenschaft des Signals ein Wechsel von einem beliebigen ersten Betriebsmodus, in dem sich das Multiprozessorsystem zum Empfangszeitpunkt des Signals befindet, in einen zweiten Betriebsmodus erfolgt.

In einem zweiten Ausführungsbeispiel kann die Umschaltung so konfiguriert sein, dass durch genau eine Eigenschaft des Signals ein Wechsel des Betriebsmodus in nur eine Richtung, d.h. von einem ersten, zuvor definierten Betriebsmodus in genau einen zweiten, zuvor definierten Betriebsmodus erfolgt, z.B. vom Performanzmodus in den Vergleichsmodus. Ist das Multiprozessorsystem zum Empfangszeitpunkt des Signals bereits in dem zweiten, als Zielzustand definierten Betriebsmodus, dann bleibt das Umschaltsignal ohne weitere Auswirkungen auf das Multiprozessorsystem. Die Umschaltung in die jeweils andere Richtung erfolgt dann anderweitig über ein bekanntes Verfahren, z.B. abhängig von einem prozessorinternen Signal oder Ereignis, dem Zugriff auf eine bestimmte Speicheradresse, abhängig von der Ausführung eines bestimmten Programms, Programmsegments oder Befehls oder aber über ein zweites, externes Signal.

Die oben genannte Eigenschaft des Signals kann das Vorhandensein eines Signals oder das Über- oder Unterschreiten eines Signalpegels sein.

In einem dritten Ausführungsbeispiel erfolgt die Umschaltung der Betriebsmodi in Abhängigkeit wenigstens eines Signals, welches außerhalb des Rechnersystems von einer Einrichtung bzw. Signalquelle W140 erzeugt wird und dem eine Kennung zugeordnet ist oder das eine solche enthält, wobei nur dann eine Umschaltung erfolgt, wenn die Kennung vorhanden ist. Durch die Kennung des Signals kann festgelegt werden, in welchen Betriebszustand das Multiprozessorsystem umschalten soll. Die Kennung kann eine Zeitbedingung enthalten und/oder einem bestimmten, vorgegebenen Signalverlauf entsprechen, z.B.
dem Gradient eines Signals,
dem Tastverhältnis eines pulsweitenmodulierten Signals,
einer vorgegebenen Frequenz eines Wechselspannungssignals, eines
pulsweitenmodulierten oder frequenzmodulierten Signals,
einer vorgegebenen Bitfolge eines Digitalsignals
einer vorgegebenen Nachrichten-ID einer Botschaft eines Kommunikationssystems

Die Kennung kann auch einer Kombination von zwei oder mehr der vorgenannten Signalverläufen entsprechen.

Die Signalquelle W140 kann dabei einem der folgenden Elemente oder einer Kombination von mehreren der folgenden Elemente entsprechen:
µC-externer Timer (z.B. von Zeitbasis eines Kommunikationssystems)
Fehlersignal einer µC-externen Einheit (z.B. Watchdog im SG)
Sensorsignal
Weiteres Steuergerät
Statussignal eines Anwendungssystems (z.B. Regelstatus eines ABS-Systems,
Abgaslimits eines Verbrennungsmotors, ... bei einem Automobilsystem)

Die Signalquelle W140 kann in einer ersten Ausführungsvariante ausschließlich dazu vorhanden sein, ein Umschaltsignal zu erzeugen. Eine solche Signalquelle kann, wie in Figur 2 gezeigt, über eine Punkt-zu-Punkt Verbindung W160 mit dem Multiprozessorsystem verbunden sein, dort speziell direkt mit der Umschalteinheit W150.

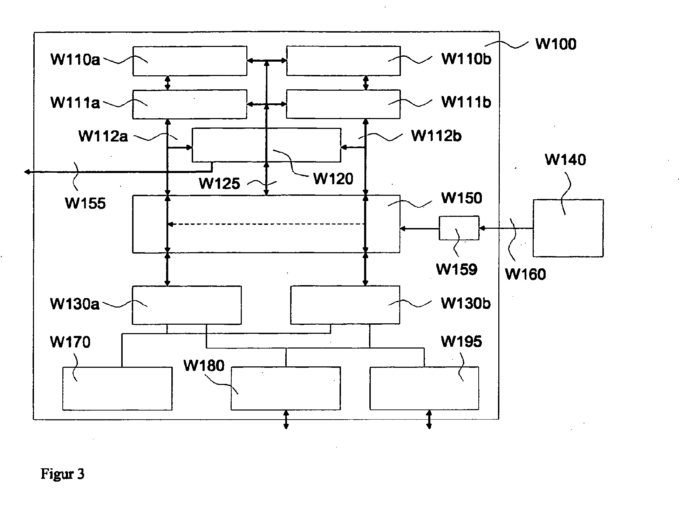

In einer zweiten, in Figur 3 gezeigten Ausführungsvariante wird das externe Umschaltsignal W160 als Interruptsignal über einen Interruptcontroller W159 empfangen. Das externe Signal bewirkt in dieser Variante die Triggerung einer Unterbrechungsverarbeitung, die Umschaltung zwischen den Betriebsmodi wird dann vom Interruptcontroller initiiert.

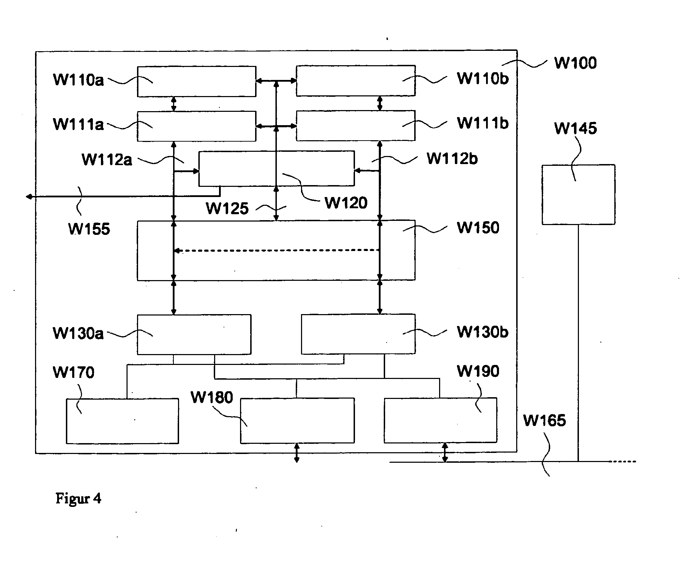

Als Signalquelle kann in einer weiteren Ausführungsvariante aber auch, wie in Figur 4 gezeigt, ein weiteres Steuergerät oder ein intelligenter Sensor W145 dienen, der über ein Kommunikationssystem W165 an das Prozessorsystem angebunden ist. Das digitale Signal wird dann über die Kommunikationsschnittstelle W195 und den internen Daten-/Adressbus an die Umschalteinheit W150 geführt.

Es ist auch eine beliebige Kombination der beschriebenen Signalquellen W140, W145, der Art der Signalanbindung W160, W165 und des Interruptcontrollers W159 vorstellbar.

In einer weiteren Ausprägung des Systems ist die Umschaltung zwischen den Betriebsmodi nicht ausschließlich von einem externen Signal, sondern durch eine Kombination wenigstens eines externen Signals und wenigstens einer Information, eines Ereignisses oder eines Signals, welches innerhalb des Rechnersystems erzeugt wird. Dieses rechnersysteminterne Ereignis kann z.B. die Ausführung eines Programmbefehls oder ein Zugriff auf eine bestimmte Speicheradresse sein. Diese Information erhält die Umschalteinheit W150 über die in Figur 2, Figur3 und Figur 4 gezeigten Verbindungen W112a, W112b zwischen Ausführungseinheiten W110a, W110b bzw. optionalem Zwischenspeicher W111a, W111b, Vergleichseinheit W120 und Umschalteinheit W150. Die Kombination des Signals erfolgt zweckmäßigerweise innerhalb der Umschalteinheit W150. Die Kombination ist in einer ersten Variante so ausgeführt, dass eine Umschaltung zwischen den Betriebsmodi nur dann erfolgt, wenn das wenigstens eine externe Signal und die wenigstens eine interne Information zeitgleich vorliegen. In einer weiteren Variante wird durch das externe Signal nur eine Freigabe einer Umschaltung erzeugt, die vorzugsweise zeitlich begrenzt ist. Eine Umschaltung ist dann nur durch ein internes Ereignis, das innerhalb eines definierten Zeitfensters nach der Freigabe auftritt, möglich.

Das externe Signal kann anstelle einer Freigabe zur Umschaltung auch die Rücknahme einer Freigabe bzw. ein Sperren einer Umschaltung erzeugen. Auch diese ist vorzugsweise zeitlich begrenzt. Damit kann vor allem eine Umschaltung zu bestimmten Zeitpunkten oder bei bestimmten Systemzuständen verhindert werden.

In den vorangehenden Ausführungsbeispielen ist jeweils ein Multiprozessorsystem mit zwei Ausführungseinheiten und zwei Betriebsmodi beschrieben. Die kennzeichnenden Merkmale der Erfindung können ebenso auf Multiprozessorsysteme mit mehr als zwei Ausführungseinheiten angewendet werden. Änderungen sind dabei hauptsächlich in der Umschalteinheit und der Vergleichseinheit notwendig.

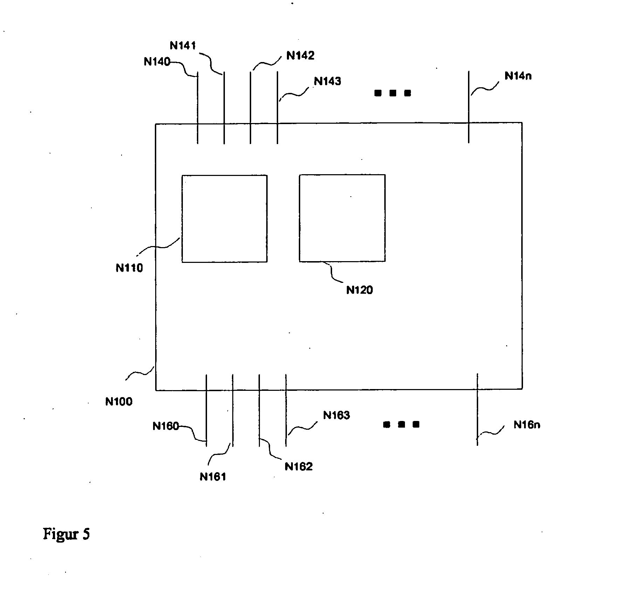

Ein allgemeiner Fall der Umschalt- und Vergleichskomponente, die auch für die Verwendung in einem System mit mehr als zwei Ausführungseinheiten geeignet ist, ist in Figur 5 gezeigt. Von den n zu berücksichtigenden Ausführungseinheiten gehen n Signale N140,..., N14n an die Umschalt- und Vergleichskomponente N100. Diese kann bis zu n Ausgangssignale N160,..., N16n aus diesen Eingangssignalen erzeugen. Im einfachsten Fall, dem "reinen Performanzmodus", werden alle Signale N14i auf die entsprechenden Ausgangssignale N16i geleitet. Im entgegen gesetzten Grenzfall, dem "reinen Vergleichsmodus" werden alle Signale N140,..., N14n nur auf genau eines der Ausgangssignale N16i reduziert.

In einem System mit n Ausführungseinheiten und n > 2 sind mehr als nur zwei Betriebsmodi denkbar. Anhand Figur 5 lässt sich darlegen, wie die verschiedenen denkbaren Modi entstehen können. Dazu ist in dieser Figur die logische Komponente einer Schaltlogik N110 enthalten. Diese legt zunächst fest, wie viele Ausgangssignale es überhaupt gibt. Weiter legt die Schaltlogik N110 die Abhängigkeit der Ausgangssignale von den Eingangssignalen fest. In mathematischer Form formuliert ist also durch die Schaltlogik eine Funktion von der Menge {N140,..., N14n} in die Menge {N1601,..., N16n} definiert.

Die Verarbeitungslogik N120 legt dann zu jedem der Ausgänge N16i fest, in welcher Form die Eingänge zu diesem Ausgangsignal beitragen. Um beispielhaft die verschiedenen Variationsmöglichkeiten zu beschreiben, sei ohne Beschränkung der Allgemeinheit angenommen, dass der Ausgang N160 durch die Signale N141,...,N14m erzeugt wird. Falls m = 1, entspricht dies einfach einer Durchschaltung des Signals, falls m = 2 dann werden die Signale N141, N142 auf Übereinstimmung verglichen. Dieser Vergleich kann synchron oder asynchron durchgeführt werden, er kann bitweise oder nur auf signifikante Bits oder auch mit einem Toleranzband durchgeführt werden.

Falls m >= 3 gibt es mehrere Möglichkeiten.

Eine erste Möglichkeit besteht darin alle Signale zu vergleichen und bei Vorhandensein mindestens zweier verschiedener Werte einen Fehler zu detektieren, den man optional signalisieren kann.

Eine zweite Möglichkeit besteht darin, dass man eine k aus m -Auswahl vornimmt (k >m/2. Diese kann durch Verwendung von Vergleichern realisiert werden. Optional kann ein Fehlersignal generiert werden, wenn eines der Signale als abweichend erkannt wird. Optional kann ein weiteres Fehlersignal generiert werden, wenn alle der zu vergleichenden Signale verschieden sind.

Eine dritte Möglichkeit besteht darin, diese Werte einem Algorithmus zuzuführen. Dieser kann beispielsweise die Bildung eines Mittelwerts, eines Medianwerts, oder die Verwendung eines fehlertoleranten Algorithmus (FTA) darstellen. Ein solcher FTA beruht darauf, Extremwerte der Eingangswerte wegzustreichen und eine Art der Mittelung über die restlichen Werte vorzunehmen. Diese Mittelung kann über die gesamte Menge der restlichen Werte, oder vorzugsweise über eine in HW leicht zu bildende Teilmenge vorgenommen werden. In diesem Fall ist es nicht immer notwendig, die Werte tatsächlich zu vergleichen. Bei der Mittelwertbildung muss beispielsweise nur addiert und dividiert werden, FTM, FTA oder Median erfordern eine teilweise Sortierung. Gegebenenfalls kann auch hier bei hinreichend großen Extremwerten optional ein Fehlersignal ausgegeben werden.

Diese verschiedenen genannten Möglichkeiten der Verarbeitung mehrerer Signale zu einem Signal werden der Kürze wegen als Vergleichsoperationen bezeichnet.

Die Aufgabe der Verarbeitungslogik ist es also, die genaue Gestalt der Vergleichsoperation für jedes Ausgangssignal - und damit auch für die zugehörigen Eingangssignale - festzulegen. Die Kombination der Information der Schaltlogik N110 (d.h. die o.g. Funktion) und der Verarbeitungslogik (d.h. die Festlegung der Vergleichsoperation pro Ausgangssignal, d.h. pro Funktionswert) ist die Modusinformation und diese legt den Modus fest. Diese Information ist im allgemeinen Fall natürlich mehrwertig, d.h. nicht nur über ein logisches Bit darstellbar. Nicht alle theoretisch denkbaren Modi sind in einer gegebenen Implementierung sinnvoll, man wird vorzugsweise die Zahl der erlaubten Modi einschränken. Zu betonen ist, dass im Fall von nur zwei Ausführungseinheiten, wo es nur einen Vergleichsmodus gibt, die gesamte Information auf nur ein logisches Bit komprimiert werden kann.

Eine Umschaltung von einem Performanz- in einen Vergleichsmodus ist im allgemeinen Fall dadurch charakterisiert, dass Ausführungseinheiten, die im Performanzmodus auf verschiedene Ausgänge hin abgebildet werden, im Vergleichsmodus auf den gleichen Ausgang hin abgebildet werden. Vorzugsweise ist dies dadurch realisiert, dass es ein Teilsystem von Ausführungseinheiten gibt, bei dem im Performanzmodus alle Eingangssignale N14i, die im Teilsystem zu berücksichtigen sind, direkt auf korrespondierende Ausgangssignale N16i geschalten werden, während sie im Vergleichsmodus alle auf einen Ausgang hin abgebildet sind. Alternativ kann eine solche Umschaltung bei Systemen mit mehr als drei Ausführungseinheiten auch dadurch realisiert werden, dass Paarungen geändert werden. Es ist dadurch dargestellt, dass man im allgemeinen Fall nicht von dem Performanzmodus und dem Vergleichsmodus sprechen kann, obwohl man in einer gegebenen Ausprägung der Erfindung die Menge der erlaubten Modi so einschränken kann, dass dies der Fall ist. Man kann aber immer von einer Umschaltung von einem Performanz- in einen Vergleichsmodus (und umgekehrt) sprechen.

## Patentansprüche

1. Verfahren zur Umschaltung bei einem Rechnersystem mit wenigstens zwei Ausführungseinheiten, wobei zwischen wenigstens zwei Betriebsmodi umgeschaltet wird und ein erster Betriebsmodus einem Vergleichsmodus und ein zweiter Betriebsmodus einem Performanzmodus entspricht, wobei die Umschaltung durch wenigstens ein Signal ausgelöst wird, welches außerhalb des Rechnersystems erzeugt wird, **dadurch gekennzeichnet, dass** dem externen Signal eine Kennung zugeordnet ist oder dieses eine solche enthält, wobei nur dann eine Umschaltung erfolgt, wenn die Kennung vorhanden ist.

2. Verfahren nach Anspruch 1, **dadurch gekennzeichnet, dass** durch die Kennung festgelegt wird, in welchen Betriebsmodus umgeschaltet wird.

3. Verfahren nach Anspruch 1, **dadurch gekennzeichnet, dass** die Kennung eine Zeitbedingung enthält, durch welche festgelegt wird wann umgeschaltet wird.

4. Verfahren nach Anspruch 1, **dadurch gekennzeichnet, dass** durch das externe Signal eine Umschaltung nur in einer Richtung zwischen den Betriebsmodi erfolgt.

5. Verfahren nach Anspruch 1, **dadurch gekennzeichnet, dass** durch das externe Signal ausschließlich eine Umschaltung vom Performanzmodus in den Vergleichsmodus erfolgt.

6. Verfahren nach Anspruch 1, **dadurch gekennzeichnet, dass** durch das externe Signal ausschließlich eine Umschaltung vom Vergleichsmodus in den Performanzmodus erfolgt.

7. Verfahren nach Anspruch 1, **dadurch gekennzeichnet, dass** das Signal die Triggerung einer Unterbrechungsverarbeitung darstellt.

8. Verfahren nach Anspruch 1, **dadurch gekennzeichnet, dass** die Kennung einem vorgegebenen Signalverlauf, insbesondere eines pulsweitenmodulierten Signals entspricht.

9. Verfahren nach Anspruch 1, **dadurch gekennzeichnet, dass** die Kennung einer vorgegebenen Frequenz entspricht.

10. Verfahren nach Anspruch 1, **dadurch gekennzeichnet, dass** die Kennung einer vorgegebenen Bitfolge eines Digitalsignals entspricht

11. Verfahren nach Anspruch 1, **dadurch gekennzeichnet, dass** die Kennung einer vorgegebenen Nachrichten-ID einer Botschaft eines Kommunikationssystems entspricht

12. Verfahren nach Anspruch 1, **dadurch gekennzeichnet, dass** die Umschaltung durch eine Kombination aus wenigstens einem Signal, welches außerhalb des Rechnersystems erzeugt wird und aus wenigstens einer Information, die innerhalb des Rechnersystems erzeugt wird, ausgelöst wird

13. Verfahren nach Anspruch 12, **dadurch gekennzeichnet, dass** eine Umschaltung nur dann erfolgt, wenn das wenigstens eine externe Signal und die wenigstens eine Rechnersysteminterne Information zeitgleich vorhanden sind.

14. Verfahren nach Anspruch 12, **dadurch gekennzeichnet, dass** eine Umschaltung nur dann erfolgt, wenn eine zeitlich begrenzte Freigabe zur Umschaltung abhängig von wenigstens einem externen Signal erfolgt und innerhalb der begrenzten Freigabezeit wenigstens eine Rechnersysteminterne Information oder ein Rechnersysteminternes Ereignis zur Umschaltung vorliegt.

15. Vorrichtung zur Umschaltung bei einem Rechnersystem mit wenigstens zwei Ausführungseinheiten, wobei Umschaltmittel enthalten sind, die derart ausgestaltet sind, dass diese zwischen wenigstens zwei Betriebsmodi umschalten, wobei ein erster Betriebsmodus einem Vergleichsmodus und ein zweiter Betriebsmodus einem Performanzmodus entspricht, wobei Empfangsmittel enthalten sind, welche wenigstens ein außerhalb des Rechnersystems erzeugtes Signal empfangen, wobei die Umschaltung durch das außerhalb des Rechnersystems erzeugte Signal ausgelöst wird **dadurch gekennzeichnet, dass** dem externen Signal eine Kennung zugeordnet ist oder dieses eine solche enthält, wobei die Umschaltmittel weiter derart ausgestaltet sind, dass nur dann eine Umschaltung erfolgt, wenn die Kennung vorhanden ist

16. Vorrichtung nach Anspruch 15, **dadurch gekennzeichnet, dass** das Empfangsmittel zum Empfang des wenigstens einen externen Signals ein Interruptcontroller ist.

17. Vorrichtung nach Anspruch 15, **dadurch gekennzeichnet, dass** Empfangsmittel enthalten sind, welche wenigstens ein außerhalb des Rechnersystems erzeugtes Signal empfangen, und Mittel enthalten sind, welche das von außerhalb empfangene Signal oder eine Kennung desselben mit einem intern erzeugten Signal kombinieret, wobei die Umschaltung durch eine Kombination aus wenigstens einem Signal, welches außerhalb des Rechnersystems erzeugt wird und aus wenigstens einer Information, die innerhalb des Rechnersystems erzeugt wird, ausgelöst wird.

## Claims

1. Method for changeover in a computer system having at least two execution units, wherein at least two modes of operation are changed over and a first mode of operation corresponds to a comparison mode and a second mode of operation corresponds to a performance mode, wherein the changeover is initiated by at least one signal which is produced outside the computer system, **characterized in that** the external signal has an associated identifier or contains such an identifier, and changeover is effected only if the identifier is present.

2. Method according to Claim 1, **characterized in that** the identifier stipulates the mode of operation to which changeover is effected.

3. Method according to Claim 1, **characterized in that** the identifier contains a time condition which stipulates when changeover is effected.

4. Method according to Claim 1, **characterized in that** the external signal changes over between the modes of operation only in one direction.

5. Method according to Claim 1, **characterized in that** the external signal changes over exclusively from the performance mode to the comparison mode.

6. Method according to Claim 1, **characterized in that** the external signal changes over exclusively from the comparison mode to the performance mode.

7. Method according to Claim 1, **characterized in that** the signal represents the triggering of interruption processing.

8. Method according to Claim 1, **characterized in that** the identifier corresponds to a prescribed signal profile, particularly of a pulse-width modulated signal.

9. Method according to Claim 1, **characterized in that** the identifier corresponds to a prescribed frequency.

10. Method according to Claim 1, **characterized in that** the identifier corresponds to a prescribed bit string of a digital signal.

11. Method according to Claim 1, **characterized in that** the identifier corresponds to a prescribed message ID of a message in a communication system.

12. Method according to Claim 1, **characterized in that** the changeover is initiated by a combination comprising at least one signal, which is produced outside the computer system, and at least one piece of information, which is produced inside the computer system.

13. Method according to Claim 12, **characterized in that** changeover is effected only if the at least one external signal and the at least one piece of information internal to the computer system are present simultaneously.

14. Method according to Claim 12, **characterized in that** changeover is effected only if a time-limited release for the changeover is provided on the basis of at least one external signal and within the limited release time there is at least one piece of information internal to the computer system or an event internal to the computer system available for the changeover.

15. Apparatus for changeover in a computer system having at least two execution units, wherein changeover means are included which are in a form such that they change over between at least two modes of operation, wherein a first mode of operation corresponds to a comparison mode and a second mode of operation corresponds to a performance mode, wherein reception means are included which receive at least one signal produced outside the computer system, wherein the changeover is initiated by the signal produced outside the computer system, **characterized in that** the external signal has an associated identifier or contains such an identifier, wherein the changeover means are also in a form such that changeover is effected only if the identifier is present.

16. Apparatus according to Claim 15, **characterized in that** the reception means for receiving the at least one external signal is an interrupt controller.

17. Apparatus according to Claim 15, **characterized in that** reception means are included which receive at least one signal produced outside the computer system, and means are included which combine the signal received from outside or an identifier thereof with an internally produced signal, wherein the changeover is initiated by a combination comprising at least one signal, which is produced outside the computer system, and at least one piece of information, which is produced inside the computer system.

## Revendications

1. Procédé de commutation dans un système d'ordinateur qui présente au moins deux unités d'exécution,
dans lequel au moins deux modes de fonctionnement sont commutés, un premier mode de fonctionnement correspondant à un mode de comparaison et un deuxième mode de fonctionnement à un mode de performances,
la commutation étant déclenchée par au moins un signal formé à l'extérieur du système d'ordinateur, **caractérisé en ce que**
une identification est associée au signal externe ou ce signal en contient une, la commutation ne s'effectuant que si l'identification est présente.

2. Procédé selon la revendication 1, **caractérisé en ce que** l'identification définit dans quel mode de fonctionnement la commutation doit être réalisée.

3. Procédé selon la revendication 1, **caractérisé en ce que** l'identification contient une condition temporelle qui définit quand la commutation doit être réalisée.

4. Procédé selon la revendication 1, **caractérisé en ce que** le signal externe a pour effet une commutation dans une seule direction entre les modes de fonctionnement.

5. Procédé selon la revendication 1, **caractérisé en ce que** le signal externe entraîne exclusivement une commutation du mode de performances au mode de comparaison.

6. Procédé selon la revendication 1, **caractérisé en ce que** le signal externe a pour effet exclusivement une commutation du mode de comparaison au mode de performances.

7. Procédé selon la revendication 1, **caractérisé en ce que** le signal représente l'activation d'un traitement d'interruption.

8. Procédé selon la revendication 1, **caractérisé en ce que** l'identification correspond à l'évolution prédéterminée d'un signal, en particulier d'un signal dont les impulsions sont modulées en largeur.

9. Procédé selon la revendication 1, **caractérisé en ce que** l'identification correspond à une fréquence prédéterminée.

10. Procédé selon la revendication 1, **caractérisé en ce que** l'identification correspond à une succession prédéterminée des bits d'un signal numérique.

11. Procédé selon la revendication 1, **caractérisé en ce que** l'identification correspond à l'ID prédéterminée d'un message d'un système de communication.

12. Procédé selon la revendication 1, **caractérisé en ce que** la commutation est déclenchée par une combinaison d'au moins un signal formé à l'extérieur du système d'ordinateur et d'au moins une information formée à l'intérieur du système d'ordinateur.

13. Procédé selon la revendication 12, **caractérisé en ce que** la commutation ne s'effectue que si le ou les signaux externes et la ou les informations internes du système d'ordinateur sont présents simultanément.

14. Procédé selon la revendication 12, **caractérisé en ce que** la commutation n'a lieu que si une autorisation de commutation limitée dans le temps a lieu sous la dépendance d'au moins un signal externe et si à l'intérieur de la durée limitée d'autorisation, au moins une information interne au système d'ordinateur ou un événement de commutation interne au système d'ordinateur sont présents.

15. Dispositif de commutation dans un système d'ordinateur qui présente au moins deux unités d'exécution, lequel dispositif présente
des moyens de commutation configurés de telle sorte qu'ils assurent la commutation entre au moins deux modes de fonctionnement, un premier mode de fonctionnement correspondant à un mode de comparaison et un deuxième mode de fonctionnement à un mode de performances, et
des moyens de réception qui reçoivent au moins un signal formé à l'extérieur du système d'ordinateur, la commutation étant déclenchée par le signal formé à l'extérieur du système d'ordinateur,
**caractérisé en ce que**
une identification est associée au signal externe ou ce dernier en contient une et
**en ce que** les moyens de commutation sont en outre configurés de telle sorte qu'une commutation n'a lieu que si l'identification est présente.

16. Dispositif selon la revendication 15, **caractérisé en ce que** le moyen de réception qui reçoit le ou les signaux externes est un contrôleur d'interruption.

17. Dispositif selon la revendication 15, **caractérisé en ce qu'**il présente des moyens de réception qui reçoivent au moins un signal formé à l'extérieur du système d'ordinateur et **en ce qu'**il contient des moyens qui combinent le signal reçu de l'extérieur ou son identification avec un signal formé intérieurement, la commutation étant déclenchée par la combinaison d'au moins un signal formé à l'extérieur du système d'ordinateur et d'au moins une information formée à l'intérieur du système d'ordinateur.
